# EUROPEAN PATENT APPLICATION

(11) **EP 2 503 453 A1**
(43) Date of publication of application: **26.09.2012**
(21) Application number: 12153250.1
(22) Date of filing: 31.01.2012
(51) Int. Cl.: G06F 9/38

(54) **Processor core with data error detection, and method for instruction execution in the same, with error avoidance**

(30) Priority: 22.03.2011 JP 2011063108
(71) Applicant: FUJITSU LIMITED, Kawasaki-shi, Kanagawa 211-8588 (JP)
(72) Inventor: Akizuki, Yasunobu, Kanagawa, 211-8588 (JP); Yoshida, Toshio, Kanagawa, 211-8588 (JP)
(74) Representative: HOFFMANN EITLE

(57) **Abstract**

A processor core (14) includes a cache memory, a register configured to hold data used for arithmetic processing, a correcting controller (37) configured to detect an error in data retrieved from the register, a cache controller configured to access a cache area of a memory space via the cache memory or a noncache area of the memory space without using the cache memory in response to an instruction executing request for executing a requested instruction, and notify a report indicating that the requested instruction is a memory access instruction for accessing the noncache area, and an instruction executing controller configured to delay execution of other instructions subjected to error detection by the correcting controller while the cache controller executes the memory access instruction for accessing the noncache area when the instruction executing controller receives the notified report.

## Description

### FIELD

The disclosures herein are related to an arithmetic processing unit and an arithmetic processing method.

### BACKGROUND

The advancement of the semiconductor manufacturing technology has led to a significant improvement in microfabrication and high-integration of transistors in a central processing unit (CPU) However, simultaneously, failures of the transistors integrated in the CPU frequently occur due to the microfabrication process and high integration of the transistors. In order to prevent such failures of the transistors, there is proposed a technique for implementing a failure detecting circuit for detecting the failures of the transistors in the CPU. With this technique, the failure detecting circuit is configured to detect the failures of the transistors prior to affecting operations of the CPU. Thus, even if some of the transistors utilized in the CPU have failed, the CPU is prevented from malfunctioning by detecting the failures of the transistors in advance. Specifically, if the detected failures of the transistors are correctable, the detected failures may be corrected and hence, the CPU may be able to continue to run without being interrupted by the failures of the transistors.

There is a technology to correct the aforementioned failures of the transistors known in the art. In this technology, an error correcting circuit may be provided for correcting such failures in data utilized for executing an arithmetic operation, and if the data include errors, the error correcting circuit is readily to correct such errors. Such data utilized for executing the arithmetic operation are retrieved from a register file such as a fixed-point register or a floating-point register of the CPU. With this technology, a pipeline is clarified at the time that an error is detected and the instruction is executed again after the detected error is corrected. This has enabled the CPU to continue to run the program executing operation without terminating the execution of the program.

Note that if a memory access instruction such as a load instruction to access a noncache area has been engaged in accessing a noncache area at the time that an error is detected, the program executing operation of the CPU is controlled such that the program is terminated without allowing the load instruction to be executed again. This is because the load instruction for accessing a noncache area may have changed the contents of data in the access destination while reading the data for the first time. If the contents of the data in the access destination that have been changed are retrieved for a second time by executing the load instruction, erroneous data may be retrieved as a result. For example, the load instruction may serve as a "read-modify-write" instruction to retrieve data and modify the retrieved data simultaneously. Such an instruction (i.e., load instruction) may be utilized for controlling a semaphore or a mutex to manage a synchronization mechanism. The load instruction may generally be executed, not for accessing a cache which is less likely to directly read or write data in an access destination, but be executed for accessing a noncache area. Further, even if the load instruction is a simple read instruction, an access destination may be a memory having a data structure in which reading one entry transitions to a next entry such as a first-in-first-out or a stack. In such a case, the load instruction may also be executed, not for accessing a cache which is less likely to directly read or write data in an access destination, but be executed for accessing a noncache area.

Thus, it may be undesirable to control the operation of the CPU to terminate a program at the time that an error is detected even when the load instruction for accessing the noncache area has already been engaged in accessing the noncache area. Accordingly, it is desirable to control the operation of the CPU to continue to execute the program without terminating the program at the time that an error is detected.

Further, if the CPU is provided with a circuit for correcting errors such as an error correcting code circuit (ECC), it may be necessary to validate the control operation of the CPU at the time that an error is generated. There is a technology to validate the control operation of the CPU at the time that an error is generated by intentionally causing an error. However, in order to validate the operation of the CPU, it is preferable to validate the operation without terminating the execution of the program. A typical technique for validating the operation at the time that an error is generated includes creating a special program that will not generate a load instruction to access a noncache area and validating the operation of the CPU by executing such a created special program. However, if the operation is validated only by executing such a special program, the validation coverage may be small. Further, extra time and cost may be required for creating the special program. Accordingly, it is desirable to validate the operation by utilizing an ordinary program that is not specifically created when data retrieved from the fixed-point register or the floating-point register for performing the arithmetic operation are found to be erroneous.

Patent Document 1: International Publication W02008/152728

Patent Document 2: International Publication MO2008/155795

Patent Document 3: Japanese Laid-open Patent Publication No. 5-274173

### SUMMARY

Accordingly, it is an object in one aspect of the invention to provide an arithmetic processing unit and an arithmetic processing method capable of continuing to execute a program executing operation without terminating the program when an error is detected at the time that data are retrieved from the registers.

According to an aspect of an embodiment, an arithmetic processing unit includes a cache memory; a register configured to hold data used for arithmetic processing; a correcting controller configured to detect an error in data retrieved from the register; a cache controller configured to access a cache area of a memory space via the cache memory or a noncache area of the memory space without using the cache memory in response to an instruction executing request for executing a requested instruction, and notify a report indicating that the requested instruction is a memory access instruction for accessing the noncache area; and an instruction executing controller configured to delay execution of other instructions subjected to error detection by the correcting controller while the cache controller executes the memory access instruction for accessing the noncache area when the instruction executing controller receives the notified report.

### BRIEF DESCRIPTION OF THE DRAWINGS

FIG. 1 is a diagram illustrating an example of a configuration of an information processing system;
FIG. 2 is a diagram illustrating an example of a configuration of one of the cores illustrated in FIG. 1;
FIG. 3 is a diagram illustrating a flow of an error correcting process carried out by an error detecting-correcting controller;
FIG. 4 is a diagram illustrating a control process flow when a load instruction for accessing a noncache area is executed;
FIG. 5 is a flowchart illustrating a control process flow when the load instruction for accessing a noncache area is executed;
FIG. 6 is a diagram illustrating an operational transition process when the load instruction for accessing a noncache area is executed;
FIG. 7 is a flowchart illustrating an operational process flow of an instruction decoder;
FIG. 8 is a flowchart illustrating an operational process flow of a primary data cache controller;
FIG. 9 is a flowchart illustrating an operational process flow of an instruction-completing controller;
FIG. 10 is a flowchart illustrating modification of an operational process flow of the primary data cache controller;
FIG. 11 is a diagram illustrating an example of a circuit configuration of a noncache access reexecuting mode instructing part;
FIG. 12 is a diagram illustrating an example of a configuration of an instruction-issuing part of the instruction decoder;
FIG. 13 is a diagram illustrating an example of a circuit configuration of the primary data cache controller; and
FIG. 14 is a diagram illustrating an example of a configuration of the primary data cache controller configured to perform different controls based on whether the primary data cache controller is in a validation mode.

### DESCRIPTION OF EMBODIMENTS

In the following, a description is given with reference to the accompanying drawings of embodiments.

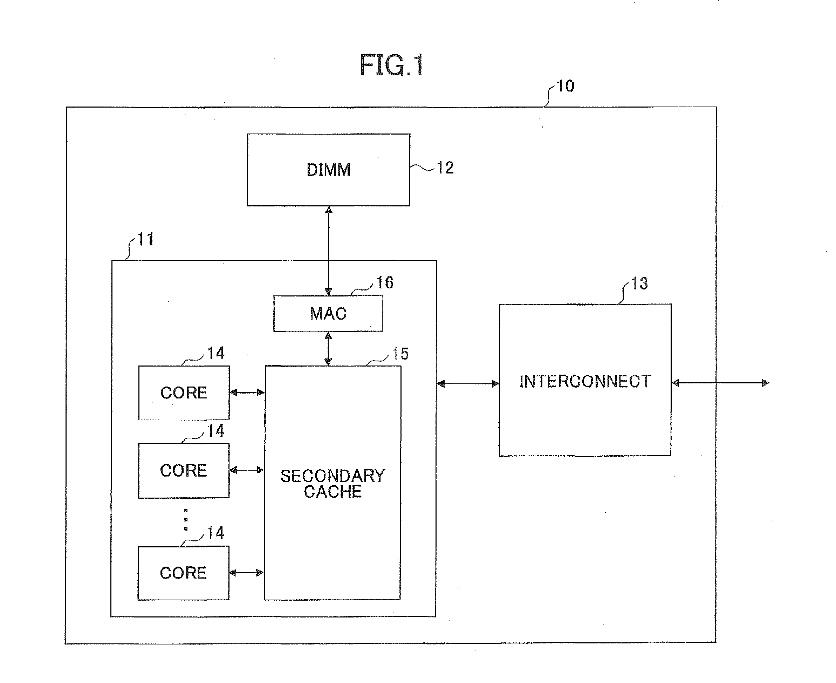

FIG. 1 is a diagram illustrating an example of a configuration of an information processing system. As illustrated in FIG. 1, an information processing system 10 includes a central processing unit (CPU) 11, a dual inline memory module (DTMM) 12 utilized as a memory device, and an interconnect part 13 configured to input or output data via external devices or other nodes. The CPU 11 includes plural cores 14, a shared secondary cache 15 and a memory access controller (MAC) 16. The MAC 16 is configured to control a data reading operation or a data writing operation from the CPU 11 to the DIMM 12.

Each of the cores 14 incorporates a primary cache. In viewing from instruction-executing controllers inside the cores 14, each of the instruction-executing controllers inside the cores 14 is configured to access a primary cache and further access a secondary cache outside the cores 14. The cache memories in the CPU 11 are arranged in a hierarchical configuration. Thus, when an error occurs in the cache memory, a penalty caused by accessing a main storage may be reduced, owing to the hierarchical configuration of the cache memories. In this example, the secondary cache 15, which may be accessed faster than the main storage, is arranged between the primary cache and the main storage (i.e., DIMM 12). With this configuration, when the error occurs in the cache memory, the penalty may be reduced by lowering the frequency in accessing the main storage.

An interconnect part 13 is configured to control data exchange between the CPU 11 and the external devices or other nodes (e.g., other CPUs). In the configuration of the information processing system 10, only one CPU is implemented on a CPU/memory board. A noncache area accessed by a load instruction or the like may include registers inside the MAC 16 and the interconnect part 13.

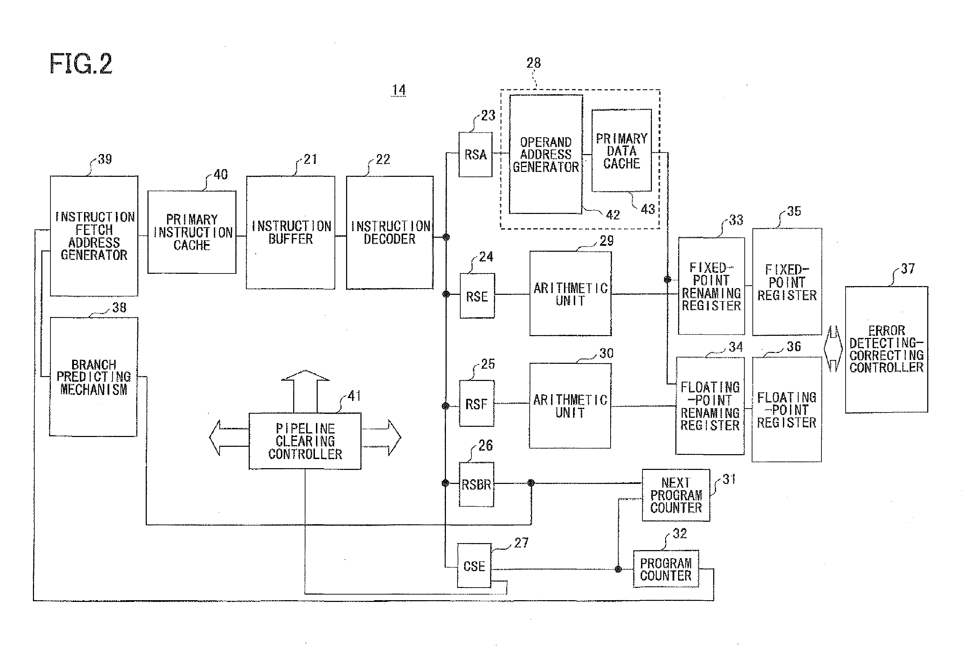

FIG. 2 is a diagram illustrating an example of a configuration of the core 14 illustrated in FIG. 1. Note that a boundary between one functional block and another functional block illustrated by a box basically indicates a functional boundary. Hence, it may not always illustrate separation of physical positions, separation of electric signals, control logical separation or the like. Each functional block may be formed of one hardware module physically separated from other blocks to a certain extent, or may be one of functions of a hardware module physically integrated with other blocks. Each functional block may be formed of one module logically separated from other blocks to a certain extent, or may be one of functions of a module logically integrated with other blocks.

The core 14 includes an instruction buffer 21, an instruction decoder 22, a reservation station for address generation (RSA) 23, a reservation station for execution (RSE) 24, and a reservation station for floating (RSF) 25. The core 14 further includes a reservation station for branch (RSBR) 26, a commit stack entry (CSE) 27, a primary data cache controller 28, an arithmetic unit 29, an arithmetic unit 30, a next program counter (NEXTPC) 31 and a program counter (PC) 32. The core 14 further includes a fixed-point renaming register 33, a floating-point renaming register 34, a fixed-point register 35, a floating-point register 36, an error detecting-correcting controller 37, a branch predicting mechanism 38 and an instruction fetch address generator 39. The core 14 further includes a primary instruction cache 40 and a pipeline clearing controller 41. The primary data cache controller 28 includes an operand address generator 42 and a primary data cache 43.

The instruction fetch address generator 39 is configured to generate an instruction fetch address based on an instruction address supplied from the program counter 32 and information acquired from the branch predicting mechanism 38. When the instruction fetch address generator 39 generates the instruction fetch address, the branch predicting mechanism 38 performs branch prediction based on information acquired from the RSBR 26. The instruction fetch address generator 39 issues an instruction fetch address and an instruction fetch request to the primary instruction cache 40 to fetch an instruction corresponding to the instruction fetch address. The fetched instruction is then stored in an instruction buffer 21. The instruction buffer 21 supplies the instructions sequentially stored in the order of program instructions to the instruction decoder 22. The instruction decoder 22 sequentially decodes the instructions in the order of program instructions and issues the decoded instructions in the order of program instructions. The instruction decoder 22 creates entries that indicate respective instructions to the RSA 23, RSE 24, RSF 25 and RSBR 26 based on types of the decoded instructions by issuing the decoded instructions.

The RSA 23 is a reservation station configured to control the created entries regardless of the order of program instructions (i.e., out of program instruction order) so as to generate a main storage operand address and execute a load instruction or a store instruction. The operand address generator 42 generates an address of an access destination based on the control carried out by the RSA 23, such that the load instruction or the store instruction is executed corresponding to the generated address in the primary data cache 43. The data retrieved based on the load instruction are stored in a register specified by the fixed-point renaming register 33 or the floating-point renaming register 34. The RSE 24 is a reservation station for controlling the created entries regardless of the program instruction order (i.e., out of program instruction order) so as to execute a fixed point arithmetic operation on the data in the specified register. The arithmetic unit 29 carries out a fixed point arithmetic operation on data in the specified register of the fixed-point renaming register 33 based on the control carried out by the RSE 24 and stores the arithmetic operation result in the specified register of the fixed-point renaming register 33. The RSF 25 is a reservation station for controlling the created entries regardless of the program instruction order (i.e., out of program instruction order) so as to execute a floating point arithmetic operation on the data in the specified register. The arithmetic unit 30 carries out a floating point arithmetic operation on data in the specified register of the floating-point renaming register 34 based on the control carried out by the RSF 25 and stores the arithmetic operation result in the specified register of the floating-point renaming register 34. The RSB 26 is a reservation station for executing a branch instruction and supplies information on a branch instruction destination to the next program counter 31 and the branch predicting mechanism 38.

The instruction decoder 22 further creates entries of all the decoded instructions in the CSE 27 configured to control the completion of the instructions in the order of program instructions. When the instructions are executed based on the controls performed by the RSA 23, RSE 24, RSF 25 and RSBR 26, respective reports on instruction execution completion are generated along with identifiers of the executed (completed) instructions. The entries corresponding to the executed (completed) instructions are released from the CSE 27 in the order of program instructions and the completion of the instructions is sequentially finalized in the order of program instructions based on the released entry of a corresponding one of the executed instructions. When the completion of the instructions released from the CSE 27 is finalized, resources corresponding to the instructions are updated. When the load instruction, the fixed-point arithmetic operation instruction, and the floating-point arithmetic operation instruction are carried out, the data in the fixed-point renaming register 33 and the floating-point renaming register 34 are transferred to the fixed-point register 35 and the floating-point register 36 such that the executed instruction results are reflected in the accessible registers via software. Simultaneously, a value of the program counter 32 is updated corresponding to the value of the next program counter 31 while the value of the next program counter 31 is changed in an appropriate amount such that the changed value of the next program counter 31 indicates the address of the next instruction to be fetched. Accordingly, the program counter 32 indicates the address of the next instruction subsequent to the executed (completed) instruction released from the CSE 27. Note that if the execution of the branch instruction is completed, the branch destination address is stored in the next program counter 31.

The pipeline clearing controller 41 is configured to cancel the executed result of the instruction when a predetermined condition is satisfied, for example, when the execution of the branch instruction has failed, or when the later-described error is generated. Accordingly, a pipeline of the instruction executed by the core 14 is cleared (flushed). Respective instructions in an execution phase, such as an instruction fetch, an instruction decode, an instruction issue, an instruction execute and an instruction completion wait, are aligned in the instruction fetch address generator 39, the instruction buffer 21, the instruction decoder 22, the RSA 23, the RSE 24, the RSF 25, the RSBR 26, the CSE 27, and the like. These instructions in the execution phases are deleted by clearing (flushing) the pipeline based on the instruction executed by the pipeline clearing controller 41. Accordingly, no instructions in the execution phases are aligned in the instruction fetch address generator 39, the instruction buffer 21, the instruction decoder 22, the RSA 23, the RSE 24, the RSF 25, the RSBR 26, the CSE 27, and the like.

When the error detecting-correcting controller 37 reads data having 1-bit error from the fixed-point register 35 or the floating-point register 36, the error detecting-correcting controller 37 detects the 1-bit error and corrects the detected 1-bit error. The error detecting-correcting controller 37 may use an error correction code (ECC) to detect and correct the 1-bit error. The error detecting-correcting controller 37 intentionally causes 1-bis error in the data to be retrieved from the fixed-point register 35 or the floating-point register 36 for validating the control operation.

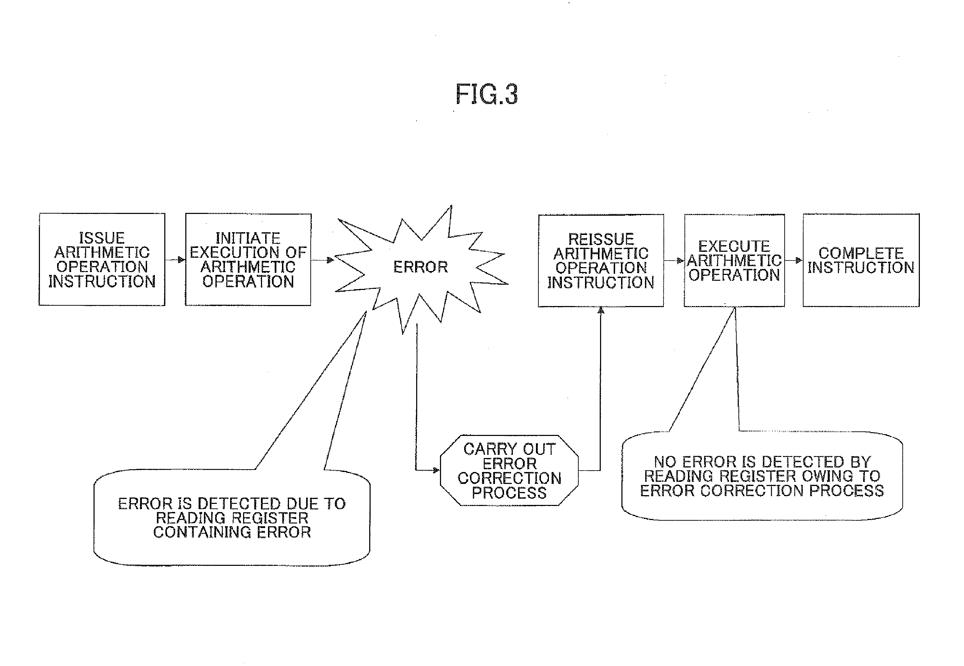

FIG. 3 is a diagram illustrating a flow of an error correcting process by the error detecting-correcting controller 37. As illustrated in FIG. 3, when an arithmetic operation instruction is issued and the execution of the arithmetic operation is initiated, an error is generated while retrieving a value held by a register that has failure. In response to the error generation, the pipeline clearing controller 41 clears (flushes) a pipeline while the error detecting-correcting controller 37 executes the error correcting process. Subsequently, the arithmetic operation is executed by refetching the arithmetic operation instruction to complete the arithmetic operation. Since the error is corrected by the error correcting process while executing the arithmetic operation, a correct arithmetic result is obtained.

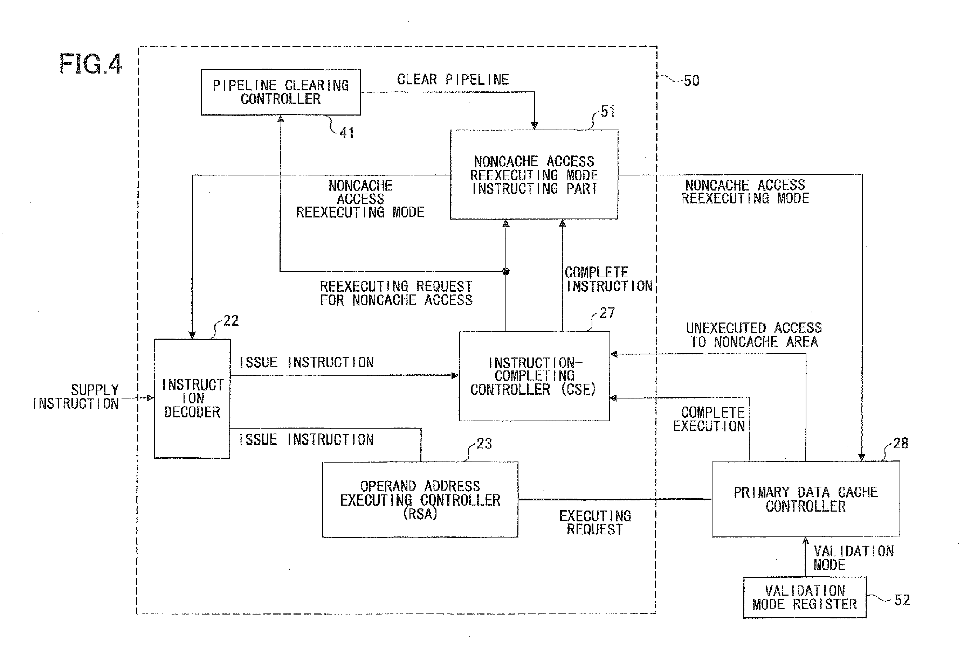

FIG. 4 is a diagram illustrating a flow of a control process when a load instruction for accessing a noncache area is executed. In FIG. 4, elements corresponding to those illustrated in FIG. 1 are provided with the same reference numerals and descriptions of such elements are omitted. In FIG. 4, the instruction-completing controller 27 corresponds to the CSE 27 in FIG. 2, and the operand address executing controller 23 corresponds to the RSA 23. The instruction decoder 22, the primary data cache controller 28 and the pipeline clearing controller 41 in FIG. 4 correspond to the instruction decoder 22, the primary data cache controller 28 and the pipeline clearing controller 41 in FIG. 2. The noncache access reexecuting mode instructing part 51 may include a control circuit configured to control a 1-bit flipflop and the settings of the flipflop, and may, though not explicitly illustrated in FIG. 2, be arranged in association with the pipeline clearing controller 41. The validation mode register 52 may be a 1-bit flipflop, and may, though not explicitly illustrated in FIG. 2, be arranged in association with the error detecting-correcting controller 37. In FIG. 4, the instruction decoder 22, the operand address executing controller 23, the instruction-completing controller 27, the pipeline clearing controller 41 and the noncache access reexecuting mode instructing part 51 are collectively illustrated as an instruction-executing controller 50.

Initially, a basic control process for executing a load instruction to access noncache area is described. The primary data cache controller 28 accesses a cache area or a noncache area based on a request for executing an instruction while reporting to the primary data cache controller 28 that the instruction requested for execution is a load instruction for accessing the noncache area. When the primary data cache controller 28 receives the report indicating that the instruction requested for execution is the load instruction for accessing the noncache area, the instruction-executing controller 50 delays execution of other instructions while allowing the primary data cache controller 28 to execute the load instruction for accessing the noncache area. Accordingly, an error may not be detected by the error detecting-correcting controller 37 (see FIG. 2) or the detected error may be disregarded while the load instruction for accessing the noncache area is in execution. Specifically, since other instructions are not executed while the load instruction for accessing the noncache area is in execution, other instructions will not read the registers. Accordingly, an error will not be detected.

In order to implement the aforementioned control process, the noncache access reexecuting mode instructing part 51 is provided in the instruction-executing controller 50 and various signals are exchanged as illustrated in FIG. 4. If the request for executing the instruction is not a reexecuting request for reexecuting the instruction but is a first executing request for executing the instruction for the first time, the primary data cache controller 28 completes the execution of the load instruction without having access to the noncache area. The primary data cache controller 28 then reports on the instruction execution completion to the instruction-completing controller 27 in the instruction-executing controller 50 by asserting a signal indicating unexecuted access to a noncache area.

When the signal indicating the unexecuted access to the noncache area is asserted, the instruction-executing controller 50 waits for the load instruction to be aligned at the head of the unfinalized, uncompleted instructions. When the load instruction is aligned at the head of the unfinalized, uncompleted instructions, the instruction-executing controller 50 asserts a noncache access reexecuting mode signal. Specifically, when the entry corresponding to the load instruction is aligned at the head of the instructions among the stored entries, the instruction-completing controller (CSE) 27 requests for reexecuting the noncache access to the noncache access reexecuting mode instructing part 51. In response to that request, a "1" may be stored in the noncache access reexecuting mode instructing part 51 to assert the noncache access reexecuting mode signal. Further, in the instruction-executing controller 50, the pipeline clearing controller 41 clears (flushes) the pipeline in response to the request for reexecuting noncache access received from the instruction-completing controller 27, and the execution of refetching the load instruction is initiated again. Specifically, in the instruction-executing controller 50, the instruction decoder 22 decodes the refetched load instruction to issue the decoded load instruction, and the operand address executing controller 23 requests the primary data cache controller 28 to execute the decoded load instruction. At this moment, since the noncache access reexecuting mode signal is being asserted in the instruction-executing controller 50, the instruction decoder 22 will not issue the instructions subsequent to the load instruction to delay the execution of the other instructions.

When the instruction-executing controller 50 requests the primary data cache controller 28 to execute the load instruction while the noncache access reexecuting mode signal is being asserted, the primary data cache controller 28 executes the load instruction to access the noncache area. When the primary data cache controller 28 executes the load instruction, the instruction-executing controller 50 negates the noncache access reexecuting mode signal to initiate issuing of other instructions subsequent to the executed load instruction. Specifically, in the instruction-executing controller 50, the instruction-completing controller 27 reports the completion of the load instruction execution to the noncache access reexecuting mode instructing part 51. In response to the execution completion report, the noncache access reexecuting mode signal output by the noncache access reexecuting mode instructing part 51 is switched to a negate state. Further, the instruction decoder 22 initiate issuing of other instructions subsequent to the load instruction in response to the negate state of the noncache access reexecuting mode signal.

If the primary data cache controller 28 is in a validation mode, the primary data cache controller 28 may report to the instruction-executing controller 50 that the executed load instruction is the load instructions to access a noncache area. If, on the other hand, the primary data cache controller 28 is not in the validation mode, the primary data cache controller 28 may execute the load instruction to access the noncache area without reporting to the instruction-executing controller 50 that the executed load instruction is the load instruction to access the noncache area. That is, only when the primary data cache controller 28 is in the validation mode, the primary data cache controller 28 may reexecute the load instruction while allowing the pipeline clearing controller 41 to clear (flush) the pipeline and delaying the execution of other instructions. By contrast, when the primary data cache controller 28 is not in the validation mode, the primary data cache controller 28 may execute the load instruction in a similar manner as other instructions executed in a normal control operation mode. Note that whether the primary data cache controller 28 is in the validation mode may be indicated by the contents of a validation mode signal based on the settings of the validation mode register 52. Accordingly, the execution of all the load instructions for accessing the noncache area in the normal operation mode may not be decelerated by performing a specific control over the load instruction for accessing the noncache area only when the primary data cache controller 28 is being in the validation mode. If the load instruction for accessing the noncache area is specifically controlled while the primary data cache controller 28 being in the validation mode, the error correcting control operation may be effectively validated without the necessity of creating a special validation program.

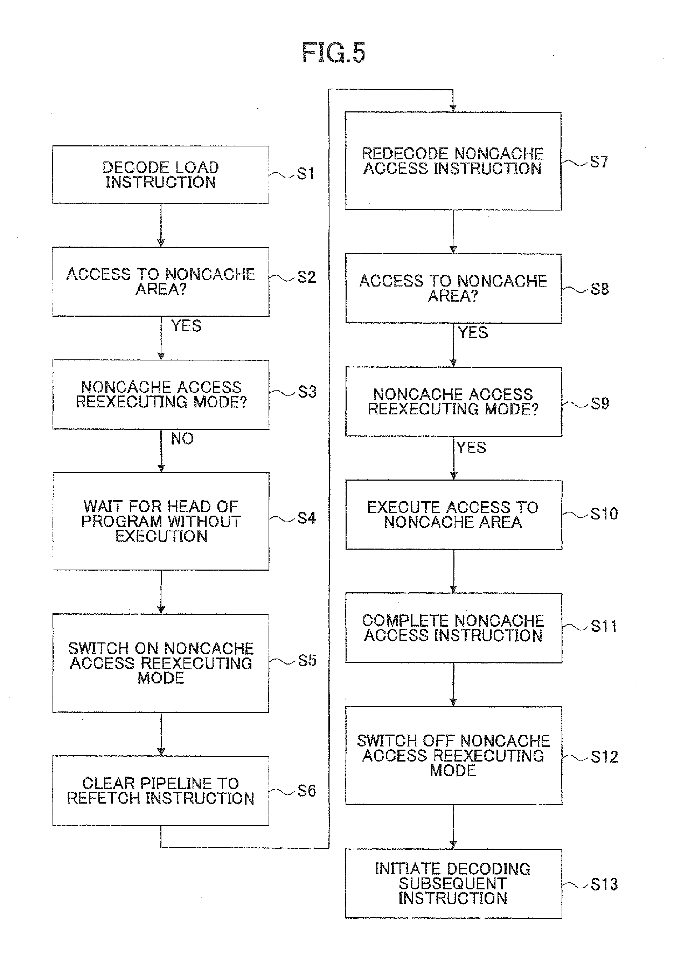

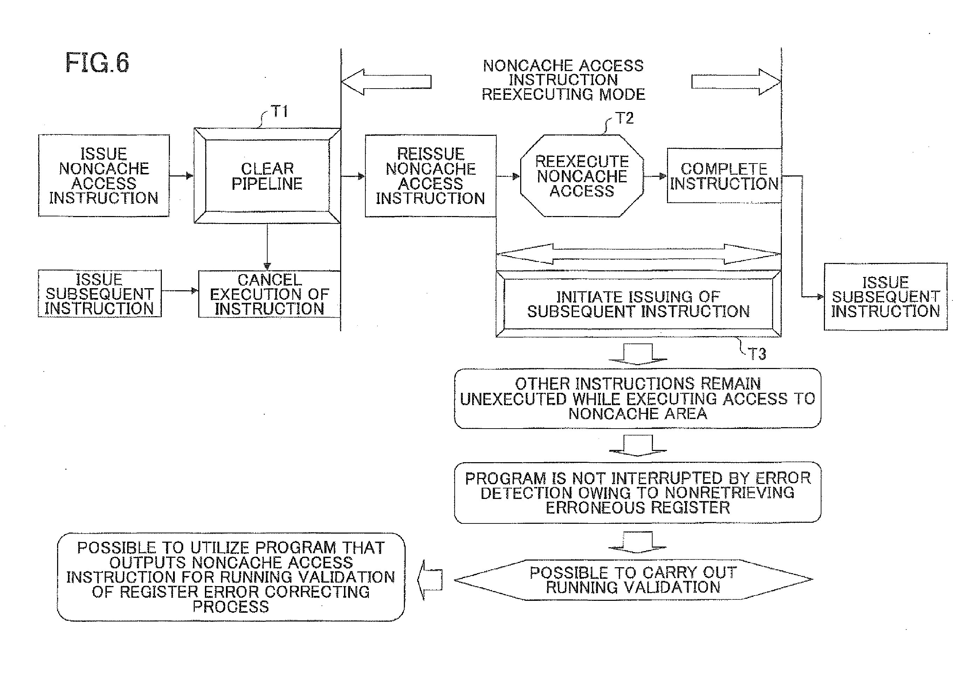

FIG. 5 is a flowchart illustrating a control process flow when the load instruction for accessing a noncache area is executed. FIG. 6 is a diagram illustrating an operational transition process when the load instruction for accessing a noncache area is executed.

As illustrated in FIG. 5, the load instruction is decoded in step S1. In step S2, whether the load instruction decoded in step S1 is the instruction for accessing the noncache area is determined. If the load instruction decoded in step S1 is the instruction for accessing the noncache area, whether the decoded load instruction corresponds to the noncache access reexecuting mode is determined in step S3 (i.e., whether the decoded load instruction is not in response to the first executing request but in response to the reexecuting request is determined). If the decoded load instruction does not correspond to the noncache access reexecuting mode, the decoded load instruction is not executed in step S4 and the execution of the decoded load instruction is delayed until the decoded load instruction is aligned at the head of the aligned instructions. That is, the execution of the decoded load instruction is delayed until the decoded load instruction is aligned at the head of the entries of the CSE 27. When the decoded load instruction is aligned at the head of the aligned instructions of the program held by the CSE 27, the noncache access reexecuting mode is switched on in step S5. Further, in step S6, the pipeline is cleared (flushed) and the decoded load instruction is refetched. Note that the decoded instruction may be refetched from the instruction address indicated by the program counter 32 illustrated in FIG. 3 in this case. At this moment, the program counter 32 indicates the decoded load instruction for accessing the noncache area, which is the head of the instructions among the entries of the CSE 27. As illustrated in FIG. 6, the instructions issued subsequent to the decoded load instruction is cancelled by clearing (flushing) the pipeline (T1).

Only the noncache access instruction is redecoded in step S7 of FIG. 5. In step S8, whether the redecoded instruction (redecoded in Step S7) is the instruction for accessing the noncache area is determined. If the redecoded instruction is the instruction for accessing the noncache area, whether the redecoded instruction corresponds to the noncache access reexecuting mode is determined in step S9 (i.e., whether the decoded load instruction is not in response to the first executing request but in response to the reexecuting request is determined). If the redecoded instruction corresponds to the noncache access reexecuting mode, the redecoded load instruction is executed to access the noncache area in step S10. Further, the execution of the redecoded load instruction is completed in step S11. As illustrated in FIG. 6, while the noncache access instruction is executed (T2), issuing of the subsequent instructions is being inhibited (T3). Thus, other instructions subsequent to the load instruction for accessing the noncache area are not executed while the load instruction for accessing the noncache area is in execution, and hence, the subsequent instructions will not read the registers. Accordingly, neither will an error be detected nor will the program be interrupted.

In step S12 of FIG. 5, the noncache access reexecuting mode is switched off in step S12. Specifically, the instruction-completing controller 27 illustrated in FIG. 4 resets the noncache access reexecuting mode instructing part 51 to switch the noncache access reexecuting mode signal to the negate state. In step 13, decoding of the subsequent instruction and issuing of the decoded instruction are initiated.

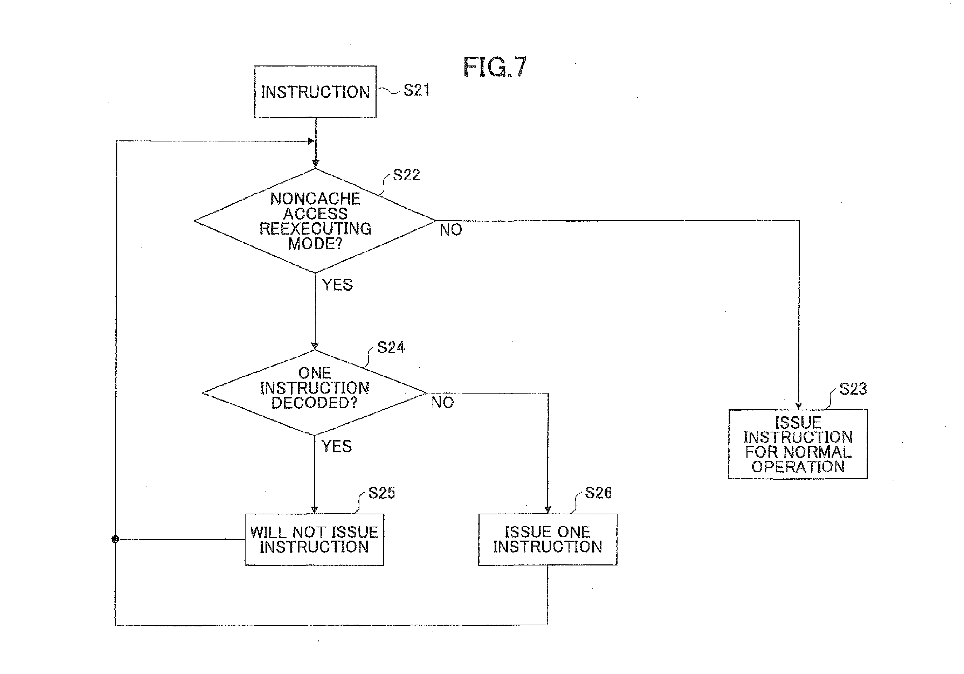

FIG. 7 is a flowchart illustrating an operational process flow of the instruction decoder 22. In step S21, the instruction decoder 22 receives the fetched instruction from the instruction buffer 21. In step S22, the instruction decoder 22 determines whether the fetched instruction corresponds to the noncache access reexecuting mode. If the instruction decoder 22 determines that the fetched instruction does not correspond to the noncache access reexecuting mode in step S22, the instruction decoder 22 proceeds with step S23 so as to issue the fetched instruction in a similar manner as the instruction issued in the normal operation mode. If, on the other hand, the instruction decoder 22 determines that the fetched instruction corresponds to the noncache access reexecuting mode in step S22, the instruction decoder 22 proceeds with step S24 so as to determine whether one instruction has been decoded in the noncache access reexecuting mode. If the instruction decoder 22 determines that no instruction has yet been decoded in the noncache access reexecuting mode, the instruction decoder 22 proceeds with step S26 so as to decode only one instruction to issue the decoded instruction. The issued instruction is a first instruction in the noncache access reexecuting mode (i.e., the first instruction in the noncache access reexecuting mode after clearing (flushing) the pipeline), which is the load instruction for accessing the noncache area. Specifically, the instruction decoder 22 creates one entry and stores the load instruction corresponding to the created entry in the operand address executing controller (RSA) 23. If, on the other hand, the instruction decoder 22 determines that one instruction has already been decoded in the noncache access reexecuting mode in step S24, the instruction decoder 22 proceeds with step S25 so as not to issue an instruction subsequent to the load instruction.

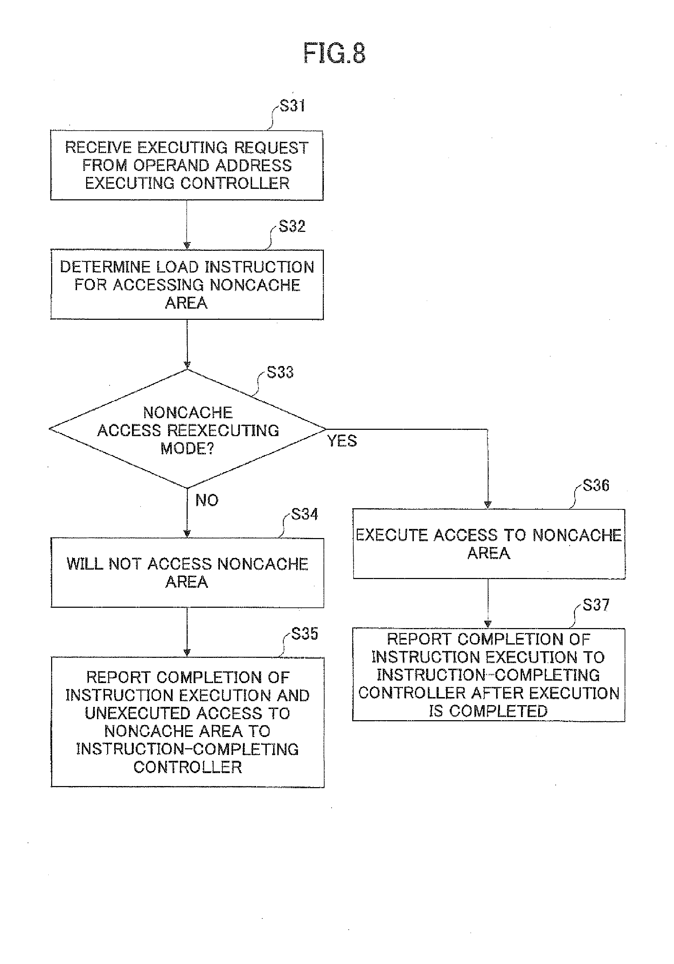

FIG. 8 is a flowchart illustrating an operational process flow of the primary data cache controller 28. In step S31, a. request for executing the instruction (hereinafter also called an "instruction executing request") is received from the operand address executing controller 23. In step S32, the primary data cache controller 28 determines whether the instruction requested for execution is the load instruction for accessing the noncache area. The primary data cache controller 28 determines whether the instruction requested for execution is the load instruction for accessing the noncache area by determining whether the operand address obtained by specifying the register corresponding to the load instruction is associated with the noncache area. In step S33, the primary data cache controller 28 determines whether the instruction requested for execution corresponds to the noncache access reexecuting mode. If the primary data cache controller 28 determines that the instruction requested for execution (i.e., the load instruction) does not correspond to the noncache access reexecuting mode (i.e., the load instruction is not corresponding to the first executing request but is corresponding to the reexecuting request), the primary data cache controller 28 proceeds with step S34 so as not to assess the noncache area. In step S35, the primary data cache controller 28 reports the completion of the instruction execution and the unexecuted access to noncache area to the instruction-completing controller 27 without accessing the noncache area.

If, on the other hand, the primary data cache controller 28 determines that the instruction requested for execution (i.e., the load instruction) corresponds to the noncache access reexecuting mode in step S33, the primary data cache controller 28 executes the access to the noncache area in step S36. When the primary data cache controller 28 completes the execution of the access to the noncache area, the primary data cache controller 28 proceeds with step S37 so as to report the completion of the instruction execution to the instruction-completing controller (CSE) 27.

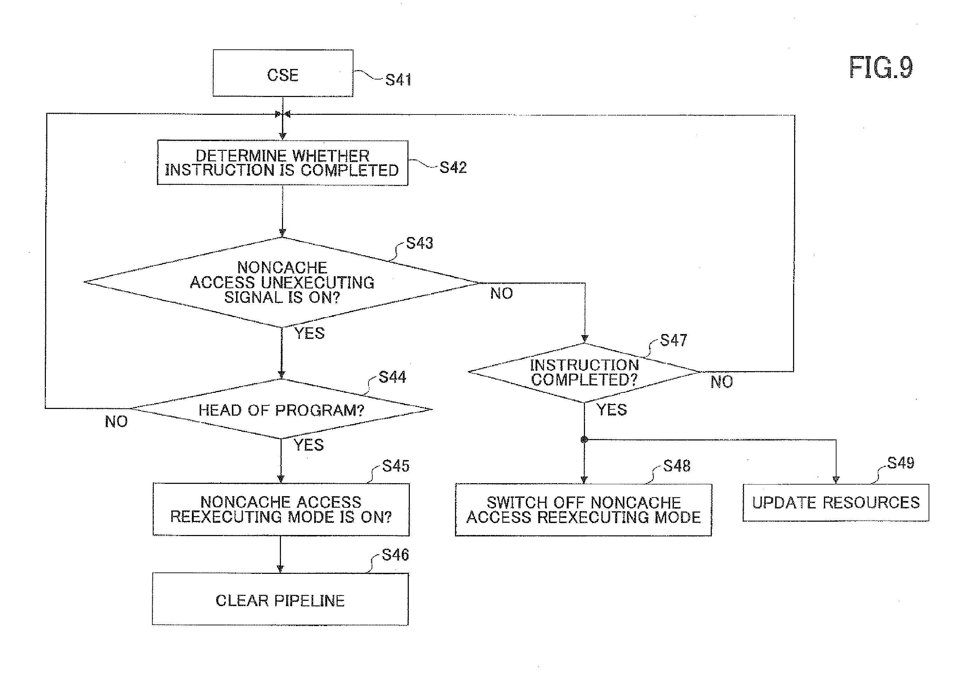

FIG. 9 is a flowchart illustrating an operational process flow of the instruction-completing controller (CSE) 27. In step S41, CSE entries are created in the instruction-completing controller (CSE) 27 corresponding to all the instructions decoded and issued by the instruction decoder 22 in the decoded order of the instructions. In step S42, the instruction-completing controller 27 determines whether the execution of the instruction has been completed in the order from the oldest entry so as to complete the execution of the instructions in the order of the program instructions. When the instruction-completing controller 27 receives the report on the instruction execution completion and a signal indicating unexecuted access to the noncache area, the instruction-completing controller 27 stores the report on the instruction execution completion and the unexecuted access to noncache area in the entry indicated by the simultaneously received entry number. In step S43, the instruction-completing controller 27 determines whether the signal indicating the unexecuted access to noncache area is in an on state corresponding to the entry determined as the entry of the completed instruction. If the signal indicating the unexecuted access to noncache area is in the on state, the corresponding entry may not be completed simultaneously with completion of a slightly older entry, and the execution of the corresponding entry may be delayed until the corresponding entry among the entries held by the instruction-completing controller 27 is aligned as the oldest entry ("NO" in step S44). When the corresponding entry is aligned as the oldest entry (i.e., the entry corresponding to the head of the program) ("YES" in step 344), the instruction-completing controller 27 switches the noncache access reexecuting mode on without completing the corresponding entry. Further, in step S46, the instruction-completing controller 27 issues a request for flushing the instruction pipeline, and the pipeline clearing controller 41 flushes the instruction pipeline in response to the instruction pipeline clearing (flushing) request.

After the instruction pipeline is cleared (flushed), the corresponding load instruction (i.e., the load instruction for accessing the noncache area) is refetched, the refetched load instruction is decoded and an entry corresponding to the refetched load instruction is created in the instruction-completing controller 27. The instruction-completing controller 27 waits for receiving the execution completion report corresponding to the load instruction from the primary data cache controller 28. When the instruction-completing controller 27 receives the report on the instruction execution completion, the instruction-completing controller 27 stores the execution completion report in the entry indicated by the simultaneously received entry number (i.e., the entry of the load instruction). In step 543, the instruction-completing controller 27 determines whether the signal indicating unexecuted access to the noncache area is in an on state corresponding to the entry determined as the entry of the completed instruction (i.e., the entry of the load instruction). If, on the other hand, the instruction-completing controller 27 determines that the signal indicating unexecuted access to the noncache area is not an on state corresponding to the entry determined as the entry of the completed instruction, the instruction-completing controller 27 proceeds with step S47 so as to determine whether to finalize the completion of the load instruction. In this case, it may be necessary to finalize the completion of the instructions in the order of the program instructions. When the completion of the instruction is finalized ("YES" in step S47), the noncache access instruction reexecuting mode is switched off (step S48) and the resources such as the registers are updated (step S49).

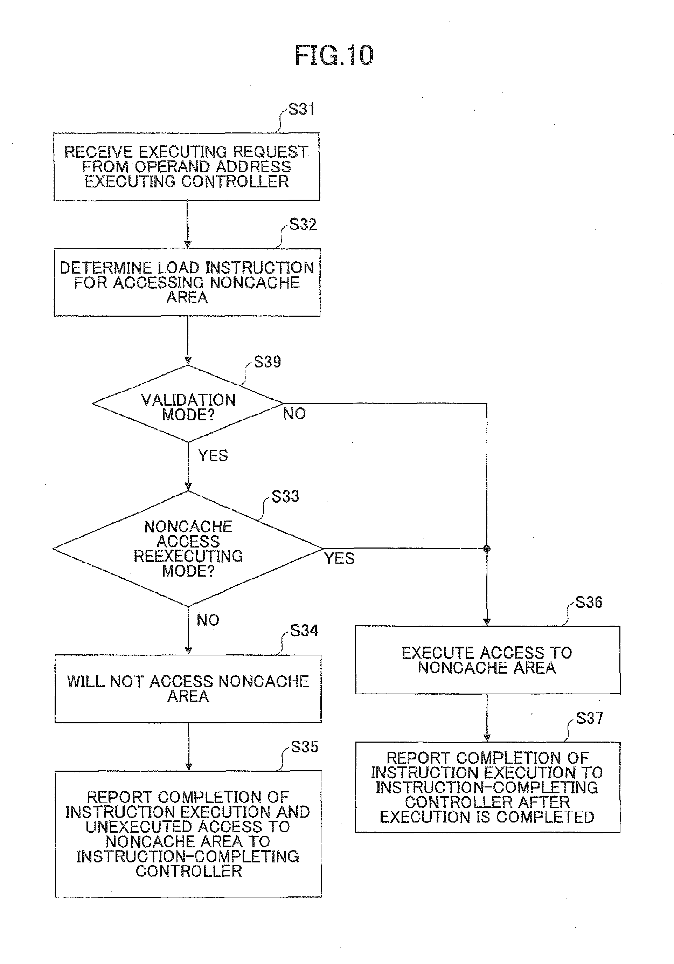

FIG. 10 is a flowchart illustrating modification of the operational process flow of the primary data cache controller 28. In FIG. 10, steps corresponding to those illustrated in FIG. 8 are provided with the same reference numerals and descriptions of such steps are omitted. The operational process flow of the primary data cache controller 28 in FIG. 10 differs from the operational process flow of the primary data cache controller 28 in FIG. 8 in that the operational process flow in FIG. 10 further includes step S39 in which whether the primary data cache controller 28 is in a validation mode is determined. If the primary data cache controller 28 is not in the validation mode ("NO" in step S39), the primary data cache controller 28 proceeds with step S36 so as to execute the access to noncache area regardless of on or off of the noncache access reexecuting mode. When the primary data cache controller 28 completes the execution of the access to the noncache area, the primary data cache controller 28 proceeds with step S37 so as to report the completion of the instruction execution to the instruction-completing controller 27.

If the validation mode is in an on state ("YES" in step S39), the primary data cache controller 28 determines whether the instruction requested for execution corresponds to the noncache access reexecuting mode in step S33. Thereafter, the primary data cache controller 28 controls the execution or unexcution of access to the noncache area based on the determination result indicating that the instruction requested for execution corresponds to or does not correspond to the noncache access reexecuting mode. The control operation in this case is similar to that illustrated in FIG. 8.

As illustrated in FIG. 10, the deceleration in executing all the load instructions for accessing the noncache area in the normal operation mode may be prevented by carrying out a specific control over the load instruction for accessing the noncache area only in the validation mode. Further, if the load instruction for accessing the noncache area is specifically controlled while the primary data cache controller 28 is in the validation mode, the error correcting control operation may be effectively validated without the necessity of creating a special validation program.

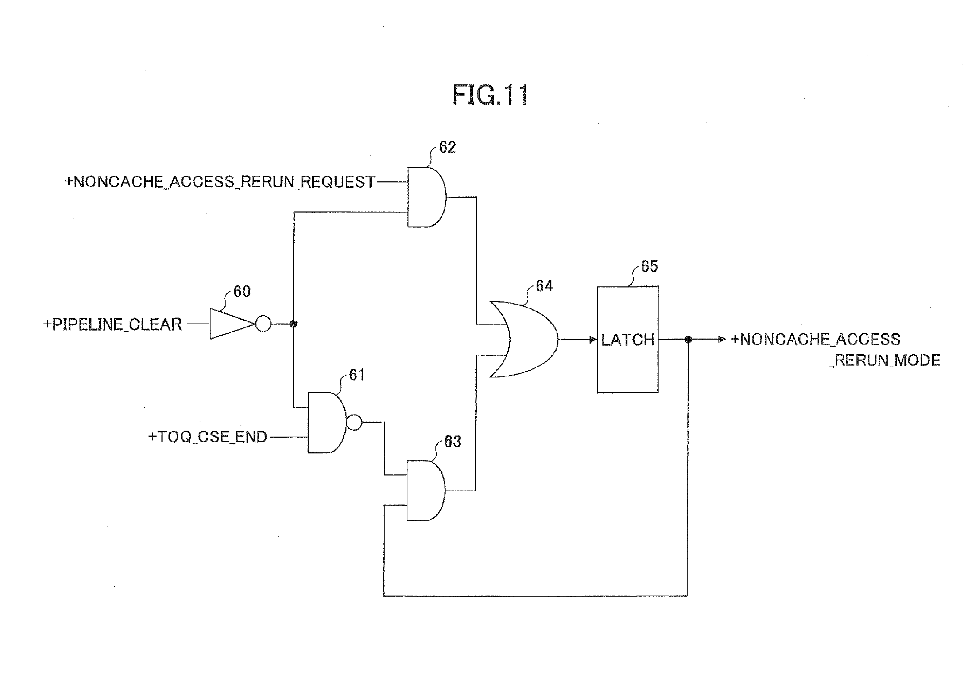

FIG. 11 is a diagram illustrating an example of a circuit configuration of the noncache access reexecuting mode instructing part 51. The noncache access reexecuting mode instructing part 51 includes an inverter 60 serving as a NOT circuit, a WAND circuit 61, AND circuits 62 and 63, an OR circuit 64, and a latch (flipflop) circuit 65. The latch circuit 65 is supplied with a predetermined cycle synchronization signal (clock signal) so that a stored value in the latch circuit 65 is updated with an output from the OR circuit 64 for each cycle.

When the noncache access instruction reexecuting request signal +NONCACHE_ACCESS_RERUN_REQUEST output by the instruction-completing controller 27 is "1" and the pipeline clear signal +PIPELINE_CLEAR is "0", "1" is set to the latch circuit 65. Accordingly, the noncache access instruction reexecuting mode signal +NONCACHE_ACCESS_RERUN_MODE is switched to an assert state (i.e., "1" in this example). The output of the latch circuit 65 is maintained as "1" by the feedback path until a condition is satisfied, in which a program head instruction completion indicating signal +TOQ_CSE_END output by the instruction-completing controller 27 is "1" and the pipeline clear signal +PIPELINE_CLEAR is "0". That is, the noncache access instruction reexecuting mode signal +NONCACHE_ACCESS_RERUN_MODE is maintained in the assert state.

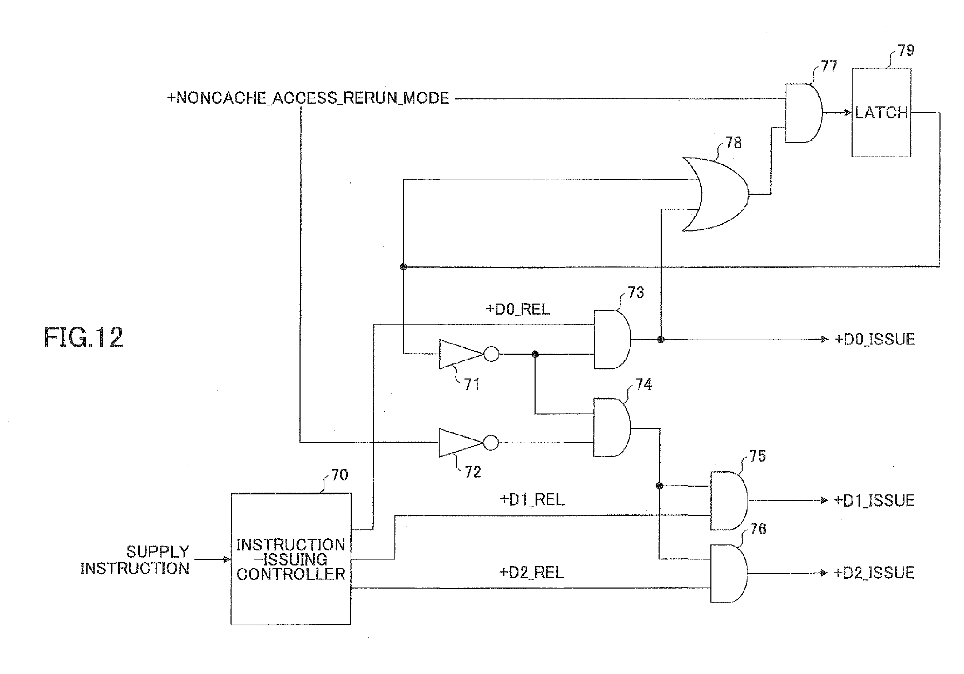

FIG. 12 is a diagram illustrating an example of a configuration of an instruction-issuing part of the instruction decoder 22. The instruction decoder 22 includes an instruction-issuing controller 70, inverters 71 and 72, AND circuits 73 to 77, an OR circuit 78, and a latch (flipflop) circuit 79. The latch circuit 79 is supplied with a predetermined cycle synchronization signal (clock signal) so that a stored value in the latch circuit 79 is updated with an output from the AND circuit 77 for each cycle.

The instruction-issuing controller 70 is sequentially supplied with instructions in the order of the program instructions and generates respective 1-bit signals +DO_REL, +D1__REL, and +D2_REL indicating the issuing of the instructions. These signals are +DO_REL, +D1_REL, and +D2_REL are in the order of the corresponding instructions. The signals +DO_REL, +D1_REL, and +D2_REL are sequentially switched to "1" in the order of the corresponding instructions. A "0" is assigned as an initial setting of the latch circuit 79. With this condition, when the +DO_REL is switched to "1", the output of the AND circuit 73 is switched to "1" and the +DO_ISSUE signal indicating the issuing of the first instruction is switched to "1". Further, when the noncache access instruction reexecuting mode signal +NONCACHE_ACCESE_RERUN_MODE is switched to "1", the output of the AND circuit 77 is switched to "1", and hence "1" is set to the latch circuit 79. The output of the latch circuit 79 is updated by the result of an AND operation of the output signal of the latch 79 and the the noncache access instruction reexecuting mode signal +NONCACHE_ACCESS_RERUN_MODE. Accordingly, the "1" is maintained as the output of the latch circuit 79 while the noncache access instruction reexecuting mode signal +NONCACHE_ACCESS_RERUN_MODE is "1". Further, the AND circuit 73 carries out an AND operation of the inverted signal of the output of the latch circuit 79 and +D0_REL signal. Accordingly, the +DO_ISSUE will not be "1" and will not issue the instruction while the output of the latch circuit 79 is "1". Hence, the instruction is not issued while the output of the latch circuit 79 is *"*1"*.* Moreover, +D1_REL and +D2_REL signals are blocked by the AND circuits 75 and 76 while any one of the +NONCACHE_ACCESS_RERUN_MODE and the output signal of the latch circuit 79 is "1". Thus, +D1_ISSUE and +D2_ISSUE will not be "1" to issue the instruction while the +NONCACHE_ACCESS_RERUN_MODE or the output signal of the latch circuit 79 is "1".

Accordingly, only the head of the instructions among the program instructions is issued after the noncache access instruction reexecuting mode signal +NONCACHE_ACCESS_RERUN_MODE is switched to "1", which may inhibit the subsequent instruction from being issued. Note that the configuration of the instruction-issuing part of the instruction decoder 22 illustrated in FIG. 12 is configured to simultaneously decode three instructions. However, four or more instructions may be simultaneously decoded in a similar configuration as the instruction-issuing part of the instruction decoder 22 illustrated in FIG. 12.

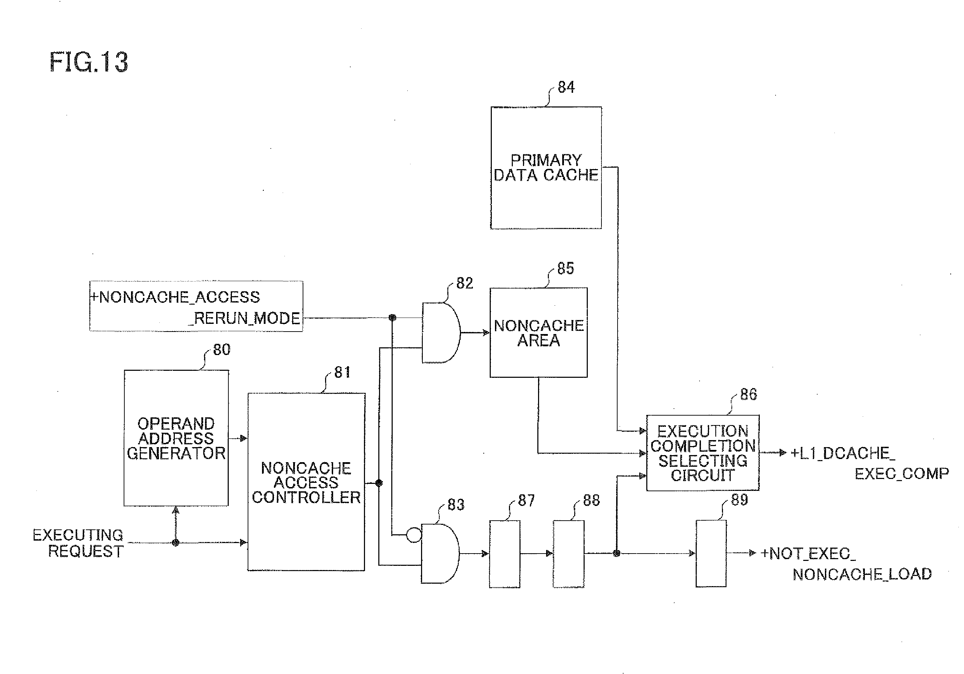

FIG. 13 is a diagram illustrating an example of a circuit configuration of the primary data cache controller 28. The primary data cache controller 28 includes an operand address generator 80, a noncache access controller 81, AND circuits 82 to 83, a primary data cache 84, an execution completion selecting circuit 86, and flipflop circuits 87 to 89. Note that the primary data cache in FIG. 13 corresponds to the primary data cache 43 in FIG. 2, and the operand address generator 80 in FIG. 13 corresponds to the operand address generator 42 in FIG. 2.

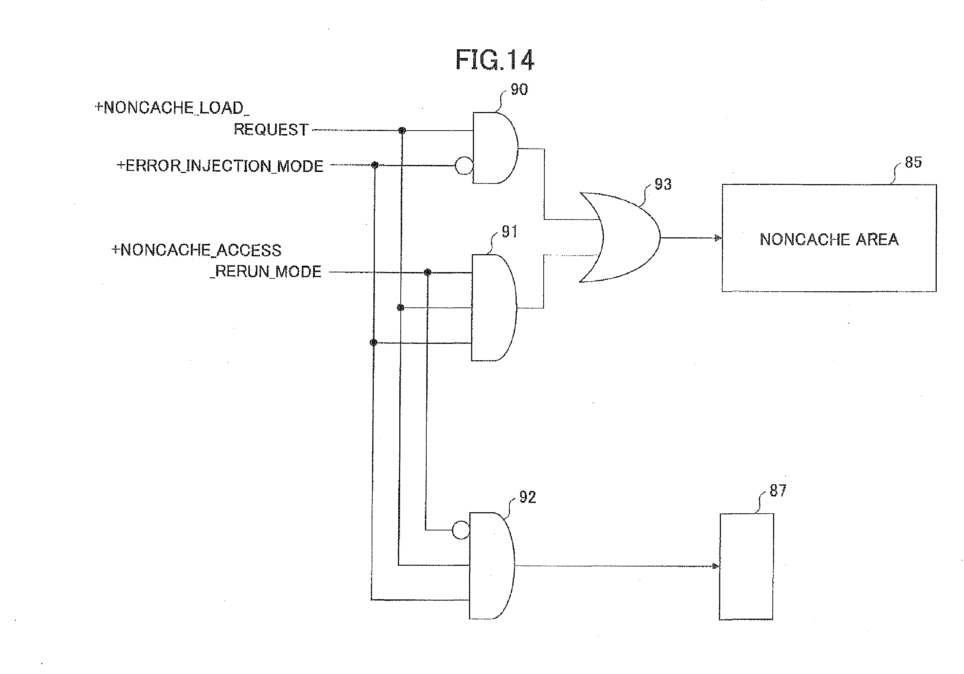

The operand address generator 80 generates an operand address for the instruction requested for execution in response to the instruction executing request received from the operand address executing controller (RSA) 23. The noncache access controller 81 determines whether the instruction requested for execution is the load instruction in response to the instruction executing request. The noncache access controller 81 further outputs a noncache access signal +NONCACHE_LOAD_REQUEST (see FIG. 14) if the instruction requested for execution is the load instruction and the address generated by the operand address generator 80 indicates the noncache area. Note that if the noncache access signal +NONCACHE_LOAD_REQUEST is "1", and the noncache access instruction reexecuting mode signal +NONCACHE_ACCESS_RERUN_MODE is "0", the output of the AND circuit 82 is "0". Thus, the access to the noncache area 85 is not executed in this case. If the noncache access signal +NONCACHE_LOAD_REQUEST is "1", and the noncache access instruction reexecuting mode signal +NONCACHE_ACCESS_RERON_MODE is "1", the output of the AND circuit 82 is "1". Thus, the access to the noncache area 85 is executed in this case.

The execution completion selecting circuit 86 selects one of the execution completion signal from the primary data cache 84, the execution completion signal from the noncache area 85, and the signal indicating unexecuted access to the noncache area from the AND circuit 83. The execution completion selecting circuit 86 generates a signal +L1_DCACHE_EXEC_COMP indicating the completion of the instruction execution by selecting one of the execution completion signals and transmits the generated signal to the instruction-completing controller 27. Further, if the execution completion selecting circuit 86 selects the signal indicating unexecuted access to the noncache area as the execution completion signal, the execution completion selecting circuit 86 transmits a noncache area access unexecuted signal +NOT_EXEC__NONCACHE_LOAD to the instruction-completing controller 27.

FIG. 14 is a diagram illustrating an example of a configuration of the primary data cache controller 28 configured to perform different controls based on whether the primary data cache controller is in the validation mode. FIG. 14 specifically illustrates a part differing from the configuration of the configuration the primary data cache controller 28 illustrated in FIG. 13, and the periphery of the part. The primary data cache controller 28 illustrated in FIG. 14 includes AND circuits 90 to 92, and an OR circuit 93 in place of the AND circuits 82 and 83 illustrated in FIG. 13. The noncache access signal +NONCACHE_LOAD_REQUEST generated by the noncache access controller 81 in FIG. 13 is supplied to each of the AND circuits 90 to 92. If a validation mode signal +ERROR_INJECTION_MODE is "0", and the noncache access signal +NONCACHE_LOAD_REQUEST is "1", the access to the noncache area 85 is executed regardless of the conditions.

If, on the other hand, the validation mode signal +ERROR_INJECTION_MODE is "1", the following control process is carried out. In this condition, if the noncache access signal +NONCACHE_LOAD_REQUEST is "1", and the noncache access instruction reexecuting mode signal +NONCACHE_ACCESS_RERUN_MODE is "0", the access to the noncache area 85 is not executed. Further, if the noncache access signal +NONCACHE_LOAD_REQUEST is "1", and the noncache access instruction reexecuting mode signal +NONCACHE_ACCESS_RERUN__MODE is "1", the access to the noncache area 85 is executed. Similar to the configuration in FIG. 13, the execution completion signal is generated by the execution completion selecting circuit 86. Further, the noncache area access unexecuted signal is output via the flipflop circuit 87 from the AND circuit 87 in a similar manner as the configuration illustrated in FIG. 13.

According to at least one embodiment, the load instruction for accessing the noncache area may be executed alone in a state where other instructions are unexecuted. Accordingly, an error will not be detected in the data retrieved from the registers when the load instruction for accessing the noncache area is being executed. That is, when an error is detected in the data retrieved from the registers, the load instruction for accessing the noncache area will not be in execution. Accordingly, the program executing operation may be continued without being interrupted.

The embodiments of the invention described so far are not limited thereto. Various modifications may be made within the scope of the inventions described in the claims.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention.

Although the embodiments of the present invention have been described in detail, it should be understood that the various changes, substitutions, and alterations could be made hereto without departing from the spirit and scope of the invention.

## Claims

1. An arithmetic processing unit **characterized by**:
a cache memory;
a register configured to hold data used for arithmetic processing;
a correcting controller configured to detect an error in data retrieved from the register;
a cache controller configured to access a cache area of a memory space via the cache memory or a noncache area of the memory space without using the cache memory in response to an instruction executing request for executing a requested instruction, and notify a report indicating that the requested instruction is a memory access instruction for accessing the noncache area; and
an instruction executing controller configured to delay execution of other instructions subjected to error detection by the correcting controller while the cache controller executes the memory access instruction for accessing the noncache area when the instruction executing controller receives the notified report.

2. The arithmetic processing unit as claimed in claim 1,
**characterized in that** when the instruction executing request for executing the requested instruction is a first executing request for executing the requested instruction for a first time, the cache controller completes executing of the requested instruction without having access to the noncache area.

3. The arithmetic processing unit as claimed in claim 2,
**characterized in that** when the execution of the requested instruction for the first time is completed in response to the first executing request, the cash controller asserts a signal indicating that the access to the noncache area is unexecuted, the signal serving as the notified report.

4. The arithmetic processing unit as claimed in claim 3,
**characterized in that** when the instruction executing controller receives from the cache controller the notified report indicating that the requested instruction is the memory access instruction for accessing the noncache area, the instruction executing controller delays execution of the requested instruction until the requested instruction is aligned at a head of unfinalized and uncompleted instructions, and
**characterized in that** when the requested instruction is aligned at the head of the unfinalized and uncompleted instructions, the instruction executing controller flushes an instruction pipeline to restart the execution of the requested instruction by refetching the requested instruction.

5. The arithmetic processing unit as claimed in claim 4,
**characterized in that** the instruction executing controller transmits to the cache controller a reexecuting request for reexecuting the refetched requested instruction while inhibiting issuing of the other instructions subsequent to the requested instruction.

6. The arithmetic processing unit as claimed in claim 5,
**characterized in that** when the instruction executing controller that has received from the cache controller the notified report transmits to the cache controller the reexecuting request, the cache controller executes the refetched requested instruction to access the noncache area.

7. The arithmetic processing unit as claimed in claim 6,
**characterized in that** when the cache controller completes the execution of the refetched requested instruction to access the noncache area, the instruction executing controller initiates issuing of the other instructions subsequent to the refetched requested instruction.

8. The arithmetic processing unit as claimed in any one of claims 1 to 7,
**characterized in that** when the requested instruction is the memory access instruction for accessing the noncache area and the cache controller is in a validation mode, the cache controller transmits to the instruction executing controller the notified report, and
**characterized in that** when the requested instruction is the memory access instruction for accessing the noncache area and the cache controller is not in the validation mode, the cache controller executes the requested instruction to access the noncache area without transmitting to the instruction executing controller the notified report indicating that the requested instruction is the memory access instruction for accessing the noncache area.

9. A method for performing an arithmetic process in an arithmetic unit including a correcting controller, a cache controller and an instruction executing controller, the method **characterized by**:
notifying a report indicating that an instruction executing request for executing a requested instruction is a memory access instruction for accessing a noncache area; and
delaying execution of other instructions while executing the memory access instruction for accessing the noncache area when receiving the notified report.

10. The method as claimed in claim 9, **characterized in that** when the instruction executing request for executing the requested instruction is a first executing request for executing the requested instruction for a first time, the execution of the requested instruction is completed without having access to the noncache area.

11. The method as claimed in claim 10, **characterized in that** when the instruction executing request for executing the requested instruction is the first executing request for executing the requested instruction for the first time, and the execution of the requested instruction for the first time is completed in response to the first executing request, a signal indicating that the access to the noncache area is unexecuted is asserted to report the unexecuted access to the noncache area.

12. The method as claimed in claim 11, further **characterized by**:
delaying execution of the requested instruction until the requested instruction is aligned at a head of unfinalized and uncompleted instructions when the notified report indicating that the requested instruction is the memory access instruction for accessing the noncache area; and
flushing an instruction pipeline and refetching the requested instruction to restart the execution of the requested instruction.

13. The method as claimed in claim 12, **characterized in that** a reexecuting request for reexecuting the refetched requested instruction is transmitted while inhibiting issuing of the other instructions subsequent to the requested instruction.

14. The method as claimed in claim 13, further **characterized by**:
transmitting the reexecuting request for reexecuting the refetched requested instruction to execute the refetched requested instruction to access the noncache area when the notified report indicating that the requested instruction is the memory access instruction for accessing the noncache area.

15. The method as claimed in claim 14, further **characterized by**:
initiating issuing of the other instructions subsequent to the refetched requested instruction when the execution of the refetched requested instruction to access the noncache area is completed.
